(19) Europäisches Patentamt
European Patent Office
Office européen des brevets

(11) **EP 2 802 834 B1**

(12) **FASCICULE DE BREVET EUROPEEN**

(45) Date de publication et mention de la délivrance du brevet:
**11.03.2020   Bulletin 2020/11**

(21) Numéro de dépôt: **13700677.1**

(22) Date de dépôt: **11.01.2013**

(51) Int Cl.:
*F28D 15/02* *(2006.01)*       *F28D 15/04* *(2006.01)*
*F28D 15/06* *(2006.01)*       *B64G 1/50* *(2006.01)*

(86) Numéro de dépôt international:
**PCT/EP2013/050506**

(87) Numéro de publication internationale:
**WO 2013/104768 (18.07.2013 Gazette 2013/29)**

(54) **DISPOSITIF DE REFROIDISSEMENT ADAPTE A LA REGULATION THERMIQUE D'UNE SOURCE DE CHALEUR D'UN SATELLITE, PROCEDE DE REALISATION DU DISPOSITIF DE REFROIDISSEMENT ET SATELLITE ASSOCIES**

KÜHLVORRICHTUNG ZUR REGULIERUNG DER TEMPERATUR EINER WÄRMEQUELLE EINES SATELLITEN UND VERFAHREN ZUR HERSTELLUNG DER ZUGEHÖRIGEN KÜHLVORRICHTUNG UND SATELLIT

COOLING DEVICE SUITABLE FOR REGULATING THE TEMPERATURE OF A HEAT SOURCE OF A SATELLITE, AND METHOD FOR PRODUCING THE ASSOCIATED COOLING DEVICE AND SATELLITE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **13.01.2012   FR 1200110**

(43) Date de publication de la demande:
**19.11.2014   Bulletin 2014/47**

(73) Titulaire: **Airbus Defence and Space SAS**
**31402 Toulouse Cedex 4 (FR)**

(72) Inventeur: **FIGUS, Christophe**
**31280 Dremil Lafarge (FR)**

(74) Mandataire: **Ipside**
**6, Impasse Michel Labrousse**
**31100 Toulouse (FR)**

(56) Documents cités:
**EP-A1- 0 000 786     EP-A1- 1 366 990**
**GB-A- 2 003 596      US-A1- 2005 155 744**

## Description

L'invention concerne un dispositif de refroidissement adapté à la régulation thermique d'une source de chaleur ainsi qu'un procédé de réalisation du dispositif de refroidissement et un satellite associés. En particulier, l'invention se rapporte à un dispositif de refroidissement tel que défini au préambule de la revendication 1. Un tel dispositif est connu de la figure 1 du document EP 1 366 990 A1.

## Préambule et art antérieur

L'invention trouve une application particulièrement avantageuse dans le domaine de la régulation thermique d'équipements dissipatifs placés dans un environnement dont la température est susceptible de subir d'amples variations. Par équipements dissipatifs, on entend tout type d'équipements ou ensemble d'équipements contenant des sources de chaleur lorsqu'ils sont en fonctionnement. Ce peuvent être des équipements électroniques, des composants à l'intérieur d'équipements électroniques, tout autre système non électronique produisant de la chaleur.

On connaît des dispositifs adaptés au contrôle thermique d'un équipement embarqué sur un véhicule, comportant une boucle de transfert de fluide diphasique à pompage capillaire, souvent appelée boucle fluide capillaire (« capillary loop heat pipe » en anglais), ou simplement boucle fluide (« loop heat pipe » en anglais), reliant thermiquement l'équipement dissipatif à un ou plusieurs radiateurs ou surfaces radiatives. Cette boucle fluide permet de transporter de l'énergie thermique d'une source de chaleur, comme l'équipement dissipatif, vers un puits de chaleur, comme une surface radiative, en utilisant la capillarité comme pression motrice et le changement de phase liquide/vapeur comme moyen de transport de l'énergie.

La boucle fluide comporte généralement un évaporateur destiné à extraire la chaleur de la source chaude et un condenseur destiné à restituer cette chaleur au puits de chaleur. L'évaporateur et le condenseur sont reliés par une conduite dans laquelle circule un fluide caloporteur à l'état majoritairement liquide dans la partie froide de la boucle fluide, et une conduite dans laquelle circule ce même fluide caloporteur à l'état majoritairement gazeux dans sa partie chaude. L'évaporateur comporte un réservoir de liquide et une structure capillaire assurant le pompage par capillarité du fluide caloporteur en phase liquide vers une zone de vaporisation.

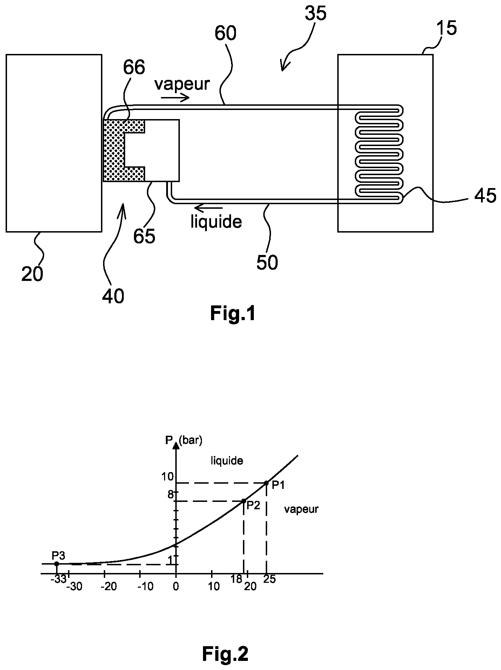

La Figure 1 décrit un type particulier, mais néanmoins représentatif, de boucle fluide capillaire représentée ici en coupe. On distingue un réservoir de fluide au voisinage d'une structure capillaire pouvant être avantageusement une masse microporeuse. Le réservoir reçoit du liquide provenant du condenseur, et la masse microporeuse amène ce liquide par capillarité jusqu'à la zone de vaporisation.

Le régime de fonctionnement normal d'une boucle fluide capillaire est un régime diphasique, le fluide étant dans un état à la fois liquide et vapeur dans la boucle fluide. Ce régime est atteint si la boucle fluide est bien dimensionnée en termes de volume et débit du fluide caloporteur par rapport au besoin de transport de la chaleur dissipée par la source de chaleur vers le puits de chaleur. Dans la suite de l'exposé, on appellera « point de fonctionnement de la boucle fluide » la température et la pression de saturation auxquelles se vaporise le fluide au niveau de l'évaporateur. Ainsi, dans l'espace des états du fluide en température et pression, les points de fonctionnement d'une boucle fluide se situent sur la courbe de Clapeyron séparant les deux états liquide et vapeur du fluide. La Figure 2 montre différents points de fonctionnement d'une boucle fluide capillaire dont le fluide caloporteur est l'ammoniac. Trois points de fonctionnement P1, P2 et P3 sont indiqués sur la figure. Ces points correspondent à des états du fluide dans la boucle fluide déterminés par des couples de température et pression de saturation de l'ammoniac, dont les valeurs numériques sont ici données de façon approximatives (pour notre propos, seuls comptent les ordres de grandeur): P1 (25°C, 10 bars), P2 (18°C, 8 bars), P3 (-33°C, 1 bar).

On rappelle ici que lorsque la boucle fluide capillaire fonctionne en régime stabilisé autour d'un point de fonctionnement comme P1, P2 ou P3 (donc en dehors de phases de démarrage, de phases transitoires, de cas de panne, etc.), la température et la pression du fluide varient au sein même de la boucle fluide en fonction de l'endroit où on se situe (condenseur, réservoir, masse microporeuse, conduits) du fait principalement du surréchauffement du fluide dans la masse microporeuse, du sous-refroidissement du liquide dans le condenseur, des pertes de charge dans le système, de la pression capillaire au sein de la masse microporeuse, etc. Cependant, ces variations sont très petites : typiquement de l'ordre de quelques degrés en températures, quelques milliers de Pascal en pression, l'essentiel des échanges thermiques devant se faire de façon optimale par changement d'état du fluide, donc au voisinage de la courbe de saturation. Dans tous les cas de fonctionnement stationnaire, elles seront considérées comme négligeables par rapport aux variations beaucoup plus importantes de l'environnement thermique que nous considérons ici, en particulier la puissance thermique de la source de chaleur et/ou la température du puits de chaleur.

Le point de fonctionnement de la boucle fluide résulte d'un équilibre entre d'une part le débit et la température du fluide refroidi au niveau du condenseur arrivant dans le réservoir, et d'autre part le réchauffement par la source de chaleur du fluide contenu dans l'évaporateur et le réservoir. Pour une même puissance thermique délivrée par la source de chaleur, supposons que la boucle fluide soit au point de fonctionnement P1, c'est-à-dire à une température de vaporisation de 25°C, et que la température du condenseur s'abaisse jusqu'à -30°C.

Cela aura pour effet d'abaisser la température du liquide à l'entrée du réservoir, et dans le réservoir. De ce fait, le volume du liquide va se contracter, ce qui conduit à une chute de pression du fluide dans la boucle fluide. La température de vaporisation du fluide va donc baisser également et la boucle fluide va nécessairement changer de point de fonctionnement, pour atteindre un point de fonctionnement à température et pression de saturation plus basse que le point P1. Son point de fonctionnement descendra le long de la courbe de Clapeyron, en passant par l'état P2 et en se dirigeant vers le point P3.

On peut observer ce phénomène dans de nombreux cas d'application où l'environnement thermique du puits de chaleur auquel est relié l'équipement dissipatif fluctue en fonction de conditions externes. C'est le cas par exemple de radiateurs placés sur la surface externe d'un engin (missile, avions, satellites) se déplaçant dans un environnement subissant des variations de température (en fonction de l'altitude par exemple) ou d'éclairement solaire (dans le cas des satellites). Les fluctuations de température du radiateur en fonction de la température de l'environnement ou de l'incidence solaire peuvent être de typiquement 50°C. Comme expliqué auparavant, l'utilisation d'une boucle fluide capillaire sans dispositif de régulation conduit à des variations tout aussi importantes de la température de l'équipement à refroidir, ce qui peut être préjudiciable à son fonctionnement.

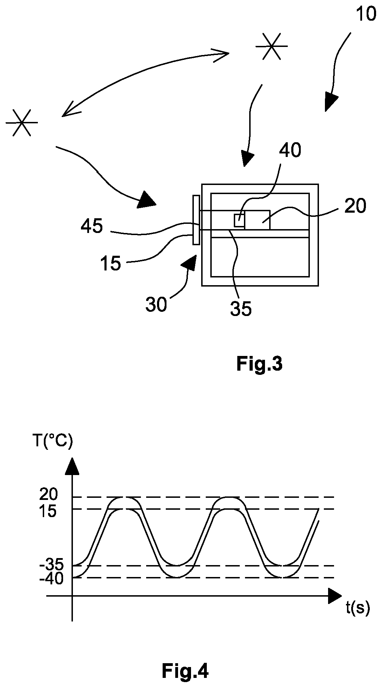

Un tel exemple d'application est illustré par la Figure 3 qui schématise dans une vue en coupe l'aménagement intérieur d'un satellite où est représenté un équipement dissipatif et un système de contrôle thermique de cet équipement constitué d'une boucle fluide capillaire dont l'évaporateur est placé en contact thermique avec l'équipement et le condenseur est placé en contact thermique un radiateur situé sur l'une des faces du satellite, à la périphérie de la caisse du satellite. La température du radiateur va varier significativement au gré de son ensoleillement. Une variation typique de la température du radiateur est d'une cinquantaine de degrés (elle dépend de l'incidence solaire maximum, des caractéristiques thermiques du radiateur, etc.).

La Figure 4 représente l'évolution au cours du temps de la température du condenseur et de la température du point de fonctionnement de la boucle fluide lorsqu'on utilise une boucle fluide capillaire suivant l'état de l'art. On voit que les deux températures subissent pratiquement les mêmes variations (à quelques degrés près).

Afin de limiter les variations de la température de saturation d'une boucle fluide capillaire dont le condenseur est soumis à des variations de température importante, d'autres éléments doivent être mis en œuvre. L'état de l'art le plus courant consiste en l'utilisation de systèmes actifs, tels que des systèmes de réchauffage. Des résistances électriques peuvent être utilisées pour réchauffer directement les équipements dont on veut stabiliser la température. On peut également utiliser des résistances électriques pour réchauffer le réservoir de liquide d'une ou plusieurs boucles fluides afin de faire varier leur conductance en vue également de contrôler la température de l'équipement. Les limitations de ce type de dispositif sont dues à la puissance consommée qui peut devenir élevée (quelques dizaines à quelques centaines de Watts) ainsi que la complexité du dispositif (il faut des sondes de températures, et un organe de contrôle traitant les mesures de température pour calculer les ordres de commande à envoyer aux résistances électriques).

D'autres solutions peuvent être envisagées comme l'utilisation de systèmes actifs, tels qu'un dispositif de type by-pass comme présenté dans le document WO2010037872A1, ou des matériaux à changement de phase décrits dans le document WO2008001004A1 visant à limiter les variations de températures des équipements. Cependant, avec ce type de dispositifs, il existe des contraintes d'opération et de stabilité dans certaines plages de température qui conduisent à des oscillations de températures plus ou moins importantes au niveau de l'équipement. D'autre part, l'utilisation de dispositifs de type by-pass conduit dans le cas où le système opère à basse température à un court-circuit total du condenseur (qui est fixé sur le radiateur) et donc à un besoin de puissance de réchauffage de ce dernier pour éviter le gel du fluide situé dans le condenseur qui n'est alors plus en mouvement.

Dans le cas d'utilisation de systèmes passifs de type matériau à changement de phase, il existe des contraintes d'opération qui conduisent à une limitation dans le temps de la capacité du système à réguler compte tenu de la masse limitée de matériau à changement de phase.

Comme décrit dans le document EP2291067A1 on connait en outre des dispositifs de refroidissement d'un convertisseur de puissance électrique comportant une boucle fluide comportant un condenseur et un évaporateur relié à un réservoir comportant des moyens de contrôle des paramètres de pression et/ou de température comme un capteur de température et un capteur de pression. Une conduite relie le condenseur et l'évaporateur et le réservoir au condenseur. Dans le cas où on utilise des mesures de températures pour réguler la température à l'intérieur du réservoir, on utilise une résistance pour chauffer le réservoir, un ventilateur pour refroidir le réservoir et une soupape de dégazage. Dans le cas où on utilise des mesures de pression, on utilise un compresseur et une vanne. Un gaz de pressurisation est alors injecté à l'intérieur du réservoir et entre en contact avec le fluide caloporteur, ce qui induit des inconvénients comme l'arrêt de la boucle fluide en cas de fuite de ce gaz dans la conduite.

## Exposé de l'invention

L'invention a notamment pour but de proposer un dispositif passif de régulation thermique permettant de réduire fortement (sans les annuler) les écarts de pression et de température dans une boucle fluide capillaire lorsque la température du puits de chaleur utilisé pour la régulation thermique et/ou la puissance thermique dissipée par la source de chaleur varient sensiblement, et ceci sans les inconvénients de l'état de la technique.

A cette fin, l'invention concerne un dispositif de refroidissement adapté à la régulation thermique d'une source de chaleur comportant au moins une boucle fluide capillaire formée par :

- un évaporateur capillaire relié à au moins un réservoir de fluide,
- au moins un condenseur,
- un fluide caloporteur circulant à l'intérieur de la boucle fluide capillaire,
- une conduite dans laquelle circule le fluide caloporteur à l'état majoritairement liquide,
- une conduite dans laquelle circule le fluide caloporteur à l'état majoritairement gazeux,
- les conduites reliant l'évaporateur au condenseur de sorte à former un circuit fermé de circulation du fluide.

Le dispositif de refroidissement comporte en outre un dispositif appelé « amortisseur thermique », constitué d'une enceinte étanche à volume variable comportant une raideur volumique adaptée pour que l'enceinte étanche à volume variable se déforme de façon passive dans une plage donnée de fonctionnement de la boucle fluide capillaire en fonction de la variation de volume et de répartition du fluide dans la boucle fluide capillaire.

Par « raideur volumique », on entend la valeur absolue du rapport entre la variation de pression exercée sur l'enceinte et la variation de volume de l'enceinte qui en résulte.

Par « de façon passive », on entend le fait qu'il n'y a pas de système de contrôle actif de la déformation de l'enceinte nécessitant des capteurs et/ou des actionneurs et/ou un organe de calcul envoyant des ordres de commande aux actionneurs en fonction des mesures délivrées par les capteurs.

Par « variation de volume du fluide », on entend la variation de volume de l'ensemble liquide et vapeur en fonction de la température en tous points de la boucle fluide pour une pression donnée.

Par « variation de répartition du fluide », on entend le fait que le liquide se répartit différemment au sein des conduites de fluide et du réservoir en fonction de la température en tous points de la boucle fluide.

Il est entendu que la précision avec laquelle l'enceinte se déformerait effectivement dans ladite plage de fonctionnement donnée est toute relative, du fait de défaut de réalisation ou d'erreurs de modélisation des phénomènes physiques en jeu.

Un point de fonctionnement de la boucle fluide est par définition la température et la pression de saturation du fluide aux points de vaporisation du fluide dans la boucle fluide. Par « plage de fonctionnement de la boucle fluide », on entend un ensemble de points de fonctionnement de la boucle fluide correspondant à un intervalle de température de saturation, ou, ce qui est équivalent, un intervalle de pression de saturation, au point de vaporisation du fluide dans la boucle fluide.

Pour un point de fonctionnement donné, la température en tous points de la boucle fluide varie en fonction des conditions d'environnement (température du puits froid, puissance transportée).

Dans tous les cas de réalisation, au moins une partie de l'enceinte est en contact avec le fluide de la boucle fluide.

Un ordre de grandeur typique de la raideur volumique de l'enceinte pour de l'ammoniac est de 1 à quelques dizaines de bars par centimètre cube. Cette raideur dépend de la pression de saturation du fluide caloporteur considéré.

Dans une première classe préférée de réalisations, l'enceinte de l'amortisseur thermique est fermée et elle se situe à l'intérieur de la boucle fluide.

Dans une première mise en œuvre de cette classe de réalisation, l'enceinte de l'amortisseur thermique comporte un soufflet.

Dans une deuxième mise en œuvre de cette classe de réalisation, l'enceinte de l'amortisseur thermique comporte une enveloppe déformable et fermée hermétiquement, et un ressort positionné à l'intérieur de cette enveloppe déformable.

Dans une troisième mise en œuvre, l'enceinte de l'amortisseur thermique comporte une enveloppe déformable et fermée hermétiquement, et un fluide positionné à l'intérieur de cette enveloppe déformable.

Dans encore une autre mise en œuvre, l'enceinte de l'amortisseur thermique comporte une enveloppe déformable fermée hermétiquement, ainsi qu'un ressort et un fluide positionnés à l'intérieur de cette enveloppe déformable.

Dans ces trois dernières mises en œuvre, l'enveloppe déformable peut prendre la forme d'un soufflet.

Avantageusement mais non nécessairement, l'amortisseur thermique est situé à l'intérieur du réservoir.

L'amortisseur thermique est plus avantageusement situé dans la partie de la boucle fluide située en aval du condenseur où se situe principalement la phase liquide du fluide caloporteur considéré.

Dans une deuxième classe différente de réalisations, l'enceinte de l'amortisseur thermique est une partie de la boucle fluide contenant du fluide.

Dans un exemple de mise en œuvre de cette autre classe de solutions, l'amortisseur thermique est une partie de la boucle fluide dont la paroi est constituée d'un soufflet métallique.

Celui-ci peut être soudé à une paroi non déformable de la boucle fluide.

Par exemple, l'amortisseur thermique est une partie du réservoir.

Dans tous les cas de réalisation, au moins une butée mécanique peut être utilisée pour limiter la variation de volume de l'enceinte.

La variation maximum du volume de l'enceinte de l'amortisseur thermique dans sa plage de déformation est adaptée pour que l'amortisseur thermique produise un effet sur une plage donnée de fonctionnement de la boucle fluide.

Par « produire un effet », on entend le fait que le point de fonctionnement de la boucle fluide pour un environnement donné de la boucle fluide (source de chaleur et puits de chaleur) est différent selon que la boucle fluide est dotée d'un amortisseur thermique ou pas.

Afin de maximiser sensiblement la plage de fonctionnement du dispositif, la variation maximum du volume de l'enceinte de l'amortisseur thermique est comprise entre 10% et 50% du volume total de la boucle.

Avantageusement, le dispositif de régulation thermique comporte en outre un dispositif de tarage modifiant la pression de tarage de l'amortisseur thermique.

Pour la première classe de réalisation, on entend par « pression de tarage », la pression maximum du fluide au-delà de laquelle le volume de l'enceinte de l'amortisseur thermique est minimum et ne peut plus varier. Pour la deuxième classe de réalisation, on entend par « pression de tarage », la pression supplémentaire externe qui vient s'exercer sur l'amortisseur thermique afin d'en augmenter artificiellement sa raideur volumique.

Le dispositif de tarage de l'amortisseur thermique comporte au moins un dispositif adapté pour faire varier la raideur volumique de l'enceinte de l'amortisseur thermique.

Par ailleurs, afin de limiter le refroidissement de l'équipement lorsque la température du puits de chaleur descend en dessous d'un seuil, il est avantageux que l'augmentation du volume de l'enceinte obstrue passivement l'arrivée de liquide dans le réservoir de la boucle fluide capillaire lorsque ledit volume atteint une valeur donnée.

Il est en outre avantageux que la variation de volume et la raideur volumique de l'amortisseur thermique soit ajustée de sorte que l'obstruction s'effectue automatiquement dès lors que la température au niveau du condenseur descend en dessous d'un seuil donné.

Afin de faciliter le redémarrage de la boucle fluide à partir d'un état où l'arrivée de liquide dans le réservoir est bloquée, il est avantageux d'utiliser un système de réchauffage permettant d'augmenter la température et la pression du fluide en contact avec l'amortisseur thermique.

L'invention concerne en outre un procédé de réalisation du dispositif selon l'invention caractérisé en ce qu'il comporte les étapes suivantes :

- choix d'une pression de tarage Pmax, correspondant à un point de fonctionnement dont la température de saturation est Tmax et la pression de saturation est Pmax,

- choix d'une température de saturation minimum Tsat<Tmax correspondant à une pression de saturation Psat,
- choix d'une température Tmin telle que Tmin<Tsat,
- calcul de la variation de volume et de répartition du fluide dans la boucle fluide entre le point de fonctionnement Tmax, Pmax, et le point de fonctionnement où le liquide est à la température Tmin et la vapeur est à la température Tsat,
- calcul de la variation de volume DV du fluide entre ces deux points de fonctionnement à l'endroit où se situe l'amortisseur thermique,
- réalisation d'une enceinte étanche à volume variable dont la pression de tarage est égale à Pmax, la variation maximum de volume est plus grande ou égale à DV et dont la raideur volumique est sensiblement égale à (Pmax-Psat)/DV.

Il est en outre avantageux que la variation de volume et la raideur volumique de l'amortisseur thermique soient ajustées de sorte que l'obstruction s'effectue automatiquement dès lors que la température du point de fonctionnement descend en dessous d'un seuil donné.

L'invention vise également un satellite comportant au moins une surface radiative caractérisé en ce qu'il est équipé d'un dispositif de refroidissement selon l'invention comportant un condenseur en contact thermique avec ladite surface radiative soumise à des variations de température de l'environnement.

**Présentation des figures**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1: une représentation graphique d'une boucle fluide capillaire de l'état de l'art ;

Figure 2 : une représentation graphique des divers points de fonctionnement d'une boucle fluide selon l'état de l'art en régime permanent ;

Figure 3 : une représentation schématique d'un satellite comportant un équipement refroidi par une boucle fluide capillaire relié à un radiateur situé à l'extérieur du satellite ;

Figure 4 : une représentation graphique de l'évolution des températures du radiateur et de l'équipement en fonction de l'éclairement du radiateur par le soleil lorsque la boucle fluide capillaire est suivant l'état de l'art le plus commun sans aucun système d'amortissement thermique ;

Figures 5a, 5b, 5c, 5d : des représentations schématiques de diverses réalisations du dispositif d'amortisseur thermique suivant l'invention, suivant une première classe de mise en œuvre, la figure 5b montrant un exemple de réalisation avec obstruction du conduit de liquide à basse température ;

Figure 6 : une représentation schématique d'une réalisation du dispositif d'amortisseur thermique suivant une deuxième classe de mise en œuvre de l'invention ;

Figures 7a-7b : des représentations graphiques de l'évolution des températures du radiateur et de l'équipement en fonction de l'éclairement du radiateur par le soleil lorsque la boucle fluide capillaire possède un amortisseur thermique suivant l'invention ;

Figure 8 : un diagramme fonctionnel montrant les différentes étapes du procédé de réalisation du dispositif de refroidissement selon l'invention.

Les éléments identiques, similaires ou analogues conservent la même référence d'une figure à l'autre.

### Description détaillée d'un mode de réalisation de l'invention

La Figure 1 représente certains détails d'une boucle fluide 35 capillaire. Cette boucle fluide 35 permet de transporter de l'énergie thermique d'une source de chaleur 20, par exemple un équipement dissipatif vers un puits de chaleur 15, par exemple une surface radiative, en utilisant la capillarité comme pression motrice et le changement de phase liquide/vapeur d'un fluide caloporteur (non représenté sur la figure) comme moyen de transport de l'énergie, afin d'évacuer l'énergie thermique produite par l'équipement 20 dissipatif par la surface 15 radiative.

Par équipements 20 dissipatifs, on entend tout type d'équipements ou ensemble d'équipements contenant des sources de chaleur lorsqu'ils sont en fonctionnement. Ce peuvent être des équipements électroniques, des composants à l'intérieur d'équipements électroniques, tout autre système non électronique produisant de la chaleur.

La boucle fluide 35 comporte un évaporateur 40, positionné contre l'équipement 20, destiné à extraire de la chaleur de l'équipement 20 et un condenseur 45, positionné contre la surface 15 radiative, destiné à évacuer cette chaleur dans l'espace par la surface 15 radiative. L'évaporateur 40 et le condenseur 45 sont reliés par une conduite 50 dans laquelle circule le fluide caloporteur à l'état majoritairement liquide et une conduite 60 dans laquelle circule le fluide caloporteur à l'état majoritairement gazeux. L'évaporateur 40 comporte un réservoir 65 de fluide relié à une masse microporeuse 66 assurant le pompage du fluide caloporteur en phase liquide par capillarité. La chaleur apportée à l'évaporateur 40 par l'équipement 20 augmente la température du fluide caloporteur au niveau de la masse microporeuse 66, ce qui provoque la vaporisation du fluide caloporteur dans la zone de vaporisation de cette masse microporeuse 66.

La vapeur ainsi créée s'évacue par la conduite 60, et se condense au niveau du condenseur 45. Le fluide sortant du condenseur 45 retourne à l'évaporateur 40 par la conduite 50.

Le régime de fonctionnement normal d'une boucle fluide 35 capillaire est un régime diphasique, le fluide étant dans un état à la fois liquide et vapeur dans la boucle fluide 35. Ce régime est atteint si la boucle fluide 35 est bien dimensionnée en termes de volume et débit du fluide caloporteur par rapport au besoin de transport de la chaleur dissipée par la source de chaleur 20 vers le puits de chaleur 15. Dans la suite de l'exposé, on appellera « point de fonctionnement de la boucle fluide » la température et la pression de saturation auxquelles se vaporise le fluide aux points de vaporisation du fluide dans la boucle fluide, c'est à dire au niveau de l'évaporateur 40. Ainsi, dans l'espace des états du fluide en température et pression, les points de fonctionnement d'une boucle fluide 35 se situent sur la courbe de Clapeyron séparant les deux états liquide et vapeur du fluide. La Figure 2 montre différents points de fonctionnement d'une boucle fluide capillaire dont le fluide caloporteur est l'ammoniac. Trois points de fonctionnement P1, P2 et P3 sont indiqués sur la figure. Ces points correspondent à des états du fluide dans la boucle fluide déterminés par des couples de température et pression de saturation de l'ammoniac, dont les valeurs numériques sont ici données de façon approximatives (pour notre propos, seuls comptent les ordres de grandeur): P1 (25°C, 10 bars), P2 (18°C, 8 bars), P3 (-33°C, 1 bar).

On rappelle ici que lorsque la boucle fluide 35 capillaire fonctionne en régime stabilisé autour d'un point de fonctionnement comme P1, P2 ou P3 (donc en dehors de phases de démarrage, de phases transitoires, de cas de panne, etc.), la température et la pression du fluide varient au sein même de la boucle fluide 35 en fonction de l'endroit où on se situe (condenseur 45, réservoir 65, masse microporeuse 66, conduites 50, 60) du fait principalement du sur-réchauffement du fluide dans la masse microporeuse 66, du sous-refroidissement du liquide dans le condenseur 45, des pertes de charge dans le système, de la pression capillaire au sein de la masse microporeuse 66, etc. Cependant, ces variations sont très petites : typiquement de l'ordre de quelques degrés en températures, quelques milliers de Pascal en pression, l'essentiel des échanges thermiques devant se faire de façon optimale par changement d'état du fluide, donc au voisinage de la courbe de saturation. Dans tous les cas de fonctionnement stationnaire, elles seront considérées comme négligeables par rapport aux variations beaucoup plus importantes de l'environnement thermique que nous considérons ici, en particulier la puissance thermique de la source de chaleur 20 et/ou la température du puits de chaleur 15.

Le point de fonctionnement de la boucle fluide 35 résulte d'un équilibre entre d'une part le débit et la température du fluide refroidi au niveau du condenseur 45 arrivant dans le réservoir 65, et d'autre part le réchauffement par la source de chaleur 20 du fluide contenu dans l'évaporateur 40 et le réservoir 65. Pour une même puissance thermique délivrée par la source de chaleur 20, supposons que la boucle fluide 35 soit au point de fonctionnement P1, c'est-à-dire à une température de vaporisation de 25°C, et que la température du condenseur 45 s'abaisse jusqu'à -30°C. Cela aura pour effet d'abaisser la température du liquide à l'entrée du réservoir 65, et dans le réservoir 65. De ce fait, le volume du liquide va se contracter, ce qui conduit à une chute de pression du fluide dans la boucle fluide 35. La température de vaporisation du fluide va donc baisser également et la boucle fluide 35 va nécessairement changer de point de fonctionnement, pour atteindre un point de fonctionnement à température et pression de saturation plus basse que le point P1. Son point de fonctionnement descendra le long de la courbe de Clapeyron, en passant par l'état P2 et en se dirigeant vers le point P3.

On peut observer ce phénomène dans de nombreux cas d'application où l'environnement thermique du puits de chaleur 15 auquel est relié l'équipement 20 dissipatif fluctue en fonction de conditions externes. C'est le cas par exemple de radiateurs placés sur la surface externe d'un engin (missile, avions, satellites) se déplaçant dans un environnement subissant des variations de température (en fonction de l'altitude par exemple) ou d'éclairement solaire (dans le cas des satellites). Les fluctuations de température du radiateur en fonction de la température de l'environnement ou de l'incidence solaire peuvent être de typiquement 50°C. Comme expliqué auparavant, l'utilisation d'une boucle fluide 35 capillaire sans dispositif de régulation conduit à des variations tout aussi importantes de la température de l'équipement 20 à refroidir, ce qui peut être préjudiciable à son fonctionnement.

La Figure 3 montre un satellite 10 comportant une surface 15 radiative, un équipement 20 dissipant de la chaleur à l'intérieur du satellite 10, et un dispositif 30 de refroidissement de type boucle fluide 35 capillaire permettant d'évacuer dans l'espace la chaleur produite par l'équipement 20 via la surface 15 radiative. L'évaporateur 40 de la boucle fluide 35 est placé en contact thermique avec l'équipement 20. Le condenseur 45 de la boucle fluide 35 est placé en contact thermique avec la surface 15 radiative située sur l'une des faces du satellite 10, à la périphérie de la caisse du satellite 10. La température de la surface 15 radiative va varier significativement au gré de son ensoleillement. Une variation typique de la température de la surface 15 radiative est d'une cinquantaine de degrés (elle dépend de l'incidence solaire maximum, des caractéristiques thermiques de la surface 15 radiative, etc.).

L'environnement thermique du satellite 10 fluctue en fonction de l'incidence du soleil, conduisant à des fluctuations de température de la surface 15 radiative et de l'équipement 20 embarqué dans le cas où cette surface 15 radiative est alternativement éclairée par le soleil et à l'ombre.

A des fins d'illustration, on supposera que le fluide caloporteur de la boucle fluide 35 est l'ammoniac.

Dans des exemples de réalisation présentés ci-après, un dispositif passif 70 appelé amortisseur thermique est positionné à l'intérieur du réservoir 65 de l'évaporateur. Dans d'autres exemples de réalisation non représentés, l'amortisseur 70 thermique est positionné dans une autre partie de la boucle fluide 35, par exemple à l'intérieur d'un autre réservoir de fluide non directement connecté à la masse microporeuse 66, ce réservoir étant avantageusement connecté à la conduite 50 reliant le condenseur 45 au réservoir 65 de l'évaporateur 40, et donc majoritairement rempli de liquide en condition de fonctionnement à basse température. Le fonctionnement de l'amortisseur 70 thermique est le même dans les deux cas. Il permet de compenser les variations de volume et de répartition du fluide à l'intérieur de la boucle fluide 35 lorsque le point de fonctionnement de la boucle fluide 35 varie, soit du fait d'une variation de température de la surface 15 radiative, liées aux variations de l'environnement, soit du fait de variations de dissipation de l'équipement 20.

L'amortisseur 70 thermique est constitué d'une enceinte 71 étanche à volume variable, le volume de ladite enceinte 71 variant de façon passive en fonction de la variation de volume et de la répartition du fluide dans la boucle fluide 35.

Par « de façon passive », on entend le fait qu'il n'y a pas de système de contrôle actif de la déformation de l'enceinte 71 nécessitant des capteurs et/ou des actionneurs et/ou un organe de calcul envoyant des ordres de commande aux actionneurs en fonction des mesures délivrées par les capteurs.

Par « variation de volume du fluide », on entend la variation de volume de l'ensemble liquide et vapeur en fonction de la température en tous points de la boucle fluide 35 pour une pression donnée.

Par « variation de répartition du fluide », on entend le fait que le liquide se répartit différemment au sein des conduites 50, 60 de fluide et du réservoir en fonction de la température en tous points de la boucle fluide 35.

L'amortisseur 70 thermique est adapté pour que le volume de l'enceinte 71 varie dans une plage donnée de fonctionnement de la boucle fluide 35.

Un point de fonctionnement de la boucle fluide 35 est par définition la température et la pression de saturation du fluide aux points de vaporisation du fluide dans la boucle fluide 35. Par « plage de fonctionnement de la boucle fluide », on entend un ensemble de points de fonctionnement de la boucle fluide 35 correspondant à un intervalle de température de saturation, ou, ce qui est équivalent, un intervalle de pression de saturation, au point de vaporisation du fluide dans la boucle fluide 35.

Pour un point de fonctionnement donné, la température en tous points de la boucle fluide 35 varie en fonction des conditions d'environnement (température de la surface 15 radiative, puissance transportée).

Dans tous les cas de réalisation, au moins une partie de l'enceinte 71 est en contact avec le fluide de la boucle fluide 35.

L'enceinte 71 a une raideur volumique qui réalise avantageusement la variation passive de son volume en fonction de la variation de volume et de répartition du fluide dans la boucle fluide 35.

Par « raideur volumique », on entend la valeur absolue du rapport entre la variation de pression exercée sur l'enceinte 71 et la variation de volume de l'enceinte 71 qui en résulte.

Avantageusement, l'amortisseur 70 thermique, en particulier sa raideur volumique, est adaptée pour se déformer dans une plage donnée de fonctionnement de la boucle fluide 35.

Il est entendu que la précision avec laquelle l'enceinte 71 se déformerait effectivement dans cette plage de fonctionnement donnée est toute relative, du fait de défaut de réalisation ou d'erreurs de modélisation des phénomènes physiques en jeu.

Un ordre de grandeur typique de la raideur volumique de l'enceinte 71 pour de l'ammoniac est de 1 à quelques dizaines de bars par centimètre cube. Cette raideur dépend de la pression de saturation du fluide caloporteur considéré.

Dans une première classe préférée de réalisations, l'enceinte 71 étanche de l'amortisseur 70 thermique est fermée et elle se situe à l'intérieur de la boucle fluide 35.

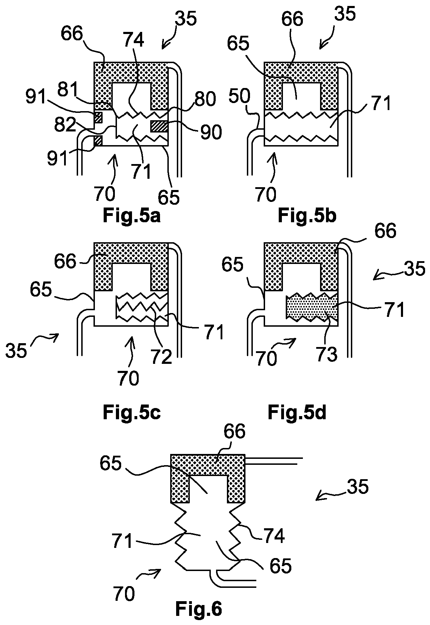

Ainsi, selon un premier mode de réalisation du dispositif 30 illustré sur la Figure 5a, l'amortisseur 70 thermique comporte une enceinte 71 fermée, étanche, à volume variable, située dans le réservoir 65 de la boucle fluide 35. Cette enceinte 71 comporte une enveloppe déformable fermée hermétiquement prenant la forme d'un soufflet 74 métallique, dont une extrémité 80 est soudée à une paroi interne de la boucle fluide 35, et l'autre extrémité 81 est soudée à une plaque métallique 82 rigide et plane. En variante, le soufflet métallique 74 et la plaque métallique 82 ne sont pas soudés mais sont fabriqués d'une seule pièce. Un vide quasi-total est réalisé dans l'enceinte 71 étanche, le résidu de gaz présent dans l'enceinte 71 au moment de sa fabrication étant avantageusement de la vapeur d'ammoniac de sorte à ne pas perturber le fonctionnement de la boucle fluide 35 en cas de fuites éventuelles de ce gaz résiduel à l'intérieur de la boucle fluide 35.

L'élasticité du soufflet 74 métallique permet à l'enceinte 71 d'adapter son volume automatiquement pour compenser la variation de volume et de répartition du fluide dans la boucle fluide 35 lors de variations importantes de la température.

En supposant pour simplifier qu'un vide total ait été réalisé dans l'enceinte 71 (l'homme de l'art pourra étendre le raisonnement et les calculs au cas général où il subsiste une pression résiduelle de gaz à l'intérieur de l'enceinte 71), le soufflet 74 métallique présente une élongation maximum Zmax dans le vide. L'enceinte 71 présente alors un volume maximum Vmax.

L'enceinte 71 présente un volume minimum Vmin lorsque l'élongation du soufflet 74 métallique a atteint sa valeur minimum Zmin, ce qui se produit lorsque la pression externe agissant sur l'enceinte 71 est plus grande qu'une valeur Ptar, appelée pression de tarage, du fait par exemple qu'à cette pression, au moins une butée 90 empêche le soufflet 74 métallique de se comprimer plus. Notons DVmax la variation maximum de l'enceinte 71 :

$$DVmax = Vmax\text{-}Vmin.$$

Avantageusement, le soufflet 74 métallique est dans son domaine d'élasticité dans toute la plage de variation de son élongation, ce qui nous supposerons dans toute la suite de la description. Si on suppose également (toujours à des fins de simplification de la description et sans enlever de généralité à l'invention) que la raideur du soufflet 74 métallique est constante sur la plage de variation de son volume, la raideur volumique K de l'enceinte 71 de l'amortisseur 70 thermique sera également constante sur cette plage. Il en résulte que le volume V de l'amortisseur 70 thermique pourra varier dans une plage de pression externe P allant d'une pression nulle à la pression Ptar avec les relations suivantes :

$$P = K.(V\text{-}Vmin)$$

En particulier

$$Ptar = K.(Vmax\text{-}Vmin) = K.DVmax,$$

et

$$K = Ptar/DVmax.$$

Notons que lorsque la pression du fluide s'exerçant sur l'amortisseur 70 thermique est plus grande que la pression de tarage Ptar, le volume de l'enceinte 71 de l'amortisseur 70 thermique ne peut plus varier. L'amortisseur 70 n'a alors plus d'influence notable sur le fonctionnement de la boucle fluide 35.

Dans l'exemple considéré d'une boucle fluide 35 à ammoniac, supposons pour fixer un ordre de grandeur que la pression de tarage soit de 10 bar et qu'au point de fonctionnement P1 de la boucle fluide 35 (où la pression de saturation est de 10 bar et la température de saturation est de 25°C), l'enceinte 71 de la boucle fluide 35 soit approximativement soumise à cette pression de 10 bar. Examinons comment l'amortisseur 70 thermique va agir sur le fonctionnement de la boucle fluide 35 lorsque la température de la surface 15 radiative diminue lentement jusqu'à une température inférieure à -30°C sous l'effet d'une baisse de température de l'environnement. A partir du point de fonctionnement P1, la température du fluide caloporteur va baisser en sortie du condenseur 45 et dans le réservoir 65 jusqu'à une valeur voisine de -30°C. Sans l'amortisseur 70 thermique, cette baisse de température produirait une baisse de pression du fluide dans la boucle fluide 35 et ferait descendre le point de fonctionnement de la boucle fluide 35 jusqu'à une température de saturation proche de -30°C, correspondant à une pression de saturation de 1 bar (point de fonctionnement P3). L'équipement 20 serait alors soumis à ces températures très basses.

Le dispositif d'amortisseur 70 thermique permet de compenser en tout ou partie les deux effets principaux résultant de la diminution de la température du fluide (essentiellement liquide) venant du condenseur 45. En premier lieu, le refroidissement provoque une diminution du volume du fluide qui peut être compensé par une variation équivalente du volume de l'enceinte 71 de l'amortisseur 70. D'autre part, l'abaissement de la température dans le condenseur 45 modifie la répartition du liquide au sein de la boucle fluide 15 du fait que la condensation de la vapeur arrivant de l'évaporateur 40 s'effectue de plus en plus en amont dans le circuit de circulation du fluide. Il y aura donc de plus en plus de liquide (en volume) au niveau du condenseur 45, ce qui retirera un volume correspondant de liquide dans le réservoir 65. L'amortisseur 70 thermique permettra également de compenser cette variation de volume de fluide dans le réservoir 65.

Il est important de noter ici que suivant l'invention, cette compensation des variations de volume ou de répartition du fluide dans la boucle fluide s'effectue de façon entièrement passive grâce à la raideur volumique relativement faible du dispositif et aux grandes variations de volume du dispositif qui en résulte.

La variation maximum du volume de l'enceinte de l'amortisseur thermique dans sa plage de déformation est adaptée pour que l'amortisseur thermique produise un effet sur une plage donnée de fonctionnement de la boucle fluide.

Par « produire un effet », on entend le fait que le point de fonctionnement de la boucle fluide pour un environnement donné de la boucle fluide (source de chaleur et puits de chaleur) est différent selon que la boucle fluide est dotée d'un amortisseur thermique ou pas.

Afin de maximiser sensiblement la plage de fonctionnement du dispositif, la variation maximum du volume de l'enceinte de l'amortisseur thermique est comprise entre 10% et 50% du volume total de la boucle.

Au total, l'amortisseur 70 thermique compensera une variation de volume DV (ici une diminution de volume) de liquide dans le réservoir 65. Dans cet état, la pression P qu'il exerce sur le fluide correspond à la variation DV de volume de l'enceinte :

$$P = Ptar - K.DV$$

soit

$$P = Ptar.(1 - DV/DVmax)$$

En conséquence, l'amortisseur 70 thermique impose une pression de saturation Psat = P à l'endroit où se vaporise le fluide, c'est-à-dire aux points de la boucle fluide 35 où s'effectue le transfert de chaleur avec l'équipement 20.

Ainsi, on voit que si DV/DVmax est petit devant 1, la pression de saturation restera proche de Ptar = 10 bar dans cet exemple, donc la température de saturation à laquelle se trouve la zone d'évaporation du fluide au contact de l'équipement 20 restera proche de 25°C.

De façon générale, l'amortisseur 70 thermique sera d'autant plus efficace que le rapport DV/DVmax est petit. Imaginons qu'au point de fonctionnement où le liquide est à -30°C dans le condenseur, la diminution du volume DV de liquide dans le réservoir 65 soit cinq fois plus petite que la variation maximum DVmax possible de l'enceinte 71 de l'amortisseur 70 thermique. La pression de saturation du fluide sera alors égale à Psat = 10bar x (1-1/5) = 8 bar. La température de saturation du fluide sera donc proche de +18°C (point de fonctionnement P2), et le transfert de chaleur entre l'équipement 20 et la boucle fluide 35 s'effectuera à cette température au lieu d'une température de - 30°C sans amortisseur 70 thermique. D'une façon générale, il sera avantageux que la variation de volume de l'enceinte 71 de l'amortisseur 70 thermique soit comprise entre 10% et 50% du volume total du fluide dans la boucle fluide 35.

Cet effet de l'amortisseur 70 thermique subsiste tant qu'aucune contrainte n'empêche le soufflet 74 de s'allonger (comme une butée 90, 91 limitant son débattement). Une condition également pour que l'amortisseur 70 thermique fonctionne est que la puissance thermique de l'équipement 20 soit suffisante pour faire passer la température du fluide de -30°C dans le réservoir 65 à +18°C au niveau de la zone de vaporisation.

Lorsque la température du fluide continue de baisser mais que la pression exercée par l'enceinte 71 ne peut plus être transférée au fluide du fait que le soufflet 74 soit totalement déployée ou qu'il soit en butée, le point de fonctionnement de la boucle fluide 35 va se déplacer vers des températures et des pressions de saturation très basses correspondant au fonctionnement d'une boucle fluide 35 sans amortisseur 70 thermique.

Pour limiter ce phénomène de refroidissement au-delà des limites de fonctionnement de l'amortisseur 70 thermique et préserver l'équipement 20 d'un sous-refroidissement important, il peut être avantageux que l'allongement du soufflet 74 provoque de lui-même l'arrêt de la circulation du fluide dans la boucle fluide 35, par exemple en faisant en sorte que sous l'effet de l'élongation du soufflet 74 lors d'une baisse continue de la température du fluide en sortie du condenseur 45, le soufflet 74 vienne obstruer, voire totalement bloquer l'arrivée de la conduite 50 de liquide dans le réservoir 65, comme cela est illustré sur la Figure 5b.

Si les conditions externes changent et que le condenseur 45 se réchauffe, il faut faire redémarrer la boucle fluide 35 en partant de cette situation où l'arrivée de liquide est obstruée. Pour faciliter ce démarrage, il peut être avantageux de réchauffer le réservoir 65 ou la conduite 50 liquide en amont du réservoir 65, par exemple avec une résistance électrique, afin d'augmenter ainsi la température et la pression du fluide au sein du réservoir 65 ce qui aura pour effet de contracter l'enceinte 71 et de libérer l'arrivée de liquide sans attendre le réchauffement global de la boucle fluide 35.

Dans la variante du mode de réalisation représentée sur la Figure 5c, l'enceinte 71 comporte en outre un ressort 72 positionné à l'intérieur de l'enceinte 71. Le ressort 72 est comprimé entre une paroi interne de la boucle fluide 35 et la plaque 82 du soufflet 74. Lorsque le ressort 72 a une raideur bien plus importante que le soufflet 74, l'utilité du soufflet 74 est essentiellement de fournir une paroi étanche et déformable, la raideur volumique de l'enceinte 71 étant fonction principalement de la raideur du ressort 72. Le mode de fonctionnement de l'amortisseur 70 thermique est le même que précédemment.

Dans un autre mode de réalisation illustré sur la Figure 5d, un fluide 73, par exemple un gaz ou un fluide diphasique, est positionné à l'intérieur de l'enceinte 71 en lieu et place du ressort 72. La pression exercée par le fluide 73 remplace la pression exercée par le ressort 72. Alternativement, il est possible d'utiliser en combinaison le ressort 72 et le fluide 73 positionnés à l'intérieur de l'enceinte 71. Les caractéristiques de raideur du ressort 72 et/ou de la raideur équivalente du fluide 73 définie par la variation de pression du fluide pour une variation de volume définissent la pression de tarage de l'amortisseur 70 thermique. Le débattement du ressort 72 et/ou le volume du fluide 73 définissent la variation de volume maximum de l'enceinte 71, et de fait la plage de fonctionnement de l'amortisseur 70 thermique.

L'utilisation d'un soufflet métallique 74 en matériau à mémoire de forme et/ou un ressort 72 en matériau à mémoire de forme et/ou d'un fluide 73 permettent de modifier le fonctionnement de l'amortisseur 70 thermique, en particulier sa pression de tarage, en chauffant ou en refroidissant le soufflet 74 métallique et/ou le ressort 72 et/ou le fluide 73. Lorsqu'on utilise un ressort 72, on peut également modifier le fonctionnement de l'amortisseur 70 en utilisant un mécanisme permettant de contracter le ressort 72.

La Figure 6 montre une autre réalisation de l'invention suivant une deuxième classe de mise en œuvre, dans laquelle l'enceinte de l'amortisseur 70 thermique est une partie de la boucle fluide 35 contenant du fluide. Pour cette deuxième classe de mise en œuvre, on entend par « pression de tarage », la pression supplémentaire externe qui vient s'exercer sur l'amortisseur 70 thermique afin d'en augmenter artificiellement la raideur volumique. L'enceinte 71 étanche et à volume variable de l'amortisseur 70 thermique est ici le corps même du réservoir 65 dont une partie a la forme d'un soufflet métallique 74. Le soufflet 74 peut être soudé à une paroi non déformable de la boucle fluide 35. Le volume de l'enceinte 71 varie de façon passive lorsque le fluide se dilate. La description précédente du mode de fonctionnement de l'amortisseur 70 thermique peut être reprise pour expliquer le fonctionnement du dispositif d'amortisseur 70 thermique lorsque la température du puits de chaleur 15 s'abaisse, mis à part le fait que le fonctionnement du soufflet 74 est ici inversé : le soufflet 74 s'allonge lorsque la pression du fluide augmente dans la boucle fluide 35, il se contracte lorsque la pression baisse. On peut alors remplacer avantageusement la pression de tarage Ptar par une pression de référence en un point de fonctionnement de la boucle fluide 35, par exemple une pression de 10 bar correspondant au point de fonctionnement P1. Le seul changement par rapport aux modes de réalisation précédents est que rien n'empêche l'allongement du soufflet 74 lorsque la température et la pression du fluide dans de la boucle fluide 35 augmente, si ce n'est sa limite élastique puis sa limite de rupture.

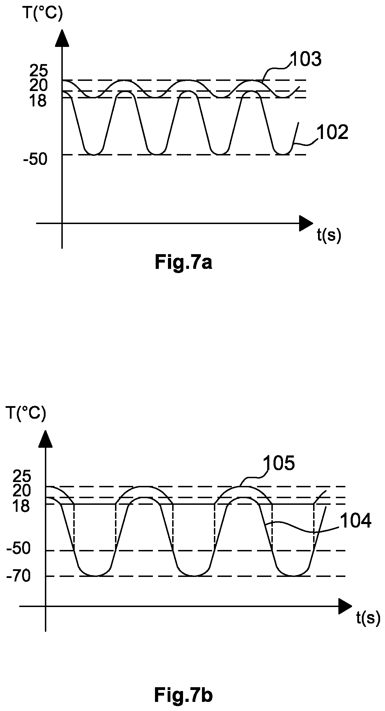

La Figure 7a montre l'évolution de la température du condenseur 45 (courbe 102) et de la température de saturation au niveau de la zone de vaporisation de l'évaporateur 40 (courbe 103) dans le cas où l'amortisseur 70 thermique est dans sa plage de fonctionnement. La courbe 103 suit les variations de la courbe 102, en restant dans une plage de températures comprises entre 18°C et 20°C lorsque la courbe 102 évolue entre -50°C et 20°C. La température de saturation (courbe 103) ne subit donc pas une grande variation au cours du temps grâce à l'amortisseur 70 thermique.

La Figure 7b montre l'évolution de la température du condenseur 45 (courbe 104) et de la température de saturation au niveau de la zone de vaporisation de l'évaporateur 40 (courbe 105) dans le cas où l'amortisseur 70 thermique sort de sa plage de fonctionnement. La courbe 105 suit les variations de la courbe 104, en restant dans une plage de températures comprises entre 18°C et 20°C lorsque la courbe 104 évolue entre -50°C et 20°C. Lorsque la courbe 104 descend en dessous de -50°C, la courbe 105 cesse de décroître pour se stabiliser à 18°C. Cela est dû à l'arrêt de la circulation du fluide par le soufflet 74 comme montré en Figure 6b. La température de saturation (courbe 103) ne subit donc pas une grande variation au cours du temps grâce à l'amortisseur 70 thermique.

Grâce à l'invention, l'énergie fournie par l'équipement 20 est toujours transmise à la surface 15 radiative, ce qui évite les problèmes rencontrés par la technologie by-pass, comme par exemple les courts-circuits du condenseur 45 et donc le besoin de réchauffage du condenseur 45 pour éviter le gel du fluide situé dans ledit condenseur 45 qui n'est alors plus en mouvement. En outre, l'invention permet, grâce à l'amortisseur 70 hydraulique, d'amortir les oscillations de température provenant de la surface 15 radiative. L'invention n'est alors pas limitée dans le temps en capacité à réguler contrairement au système faisant appel à un matériau à changement de phase.

Contrairement à un système actif tel qu'un système de réchauffage, le dispositif de refroidissement de l'invention est simple et n'est pas limité en puissance consommée.

Contrairement aux systèmes actifs tels qu'un dispositif de type by-pass ou des matériaux à changement de phase, le dispositif de refroidissement de l'invention ne subit pas de contraintes d'opération et de stabilité dans certaines plages de températures.

Contrairement au dispositif de refroidissement comportant une soupape de dégazage, le dispositif de refroidissement de l'invention évite d'injecter un gaz de pressurisation pouvant provoquer l'arrêt de la boucle fluide 35.

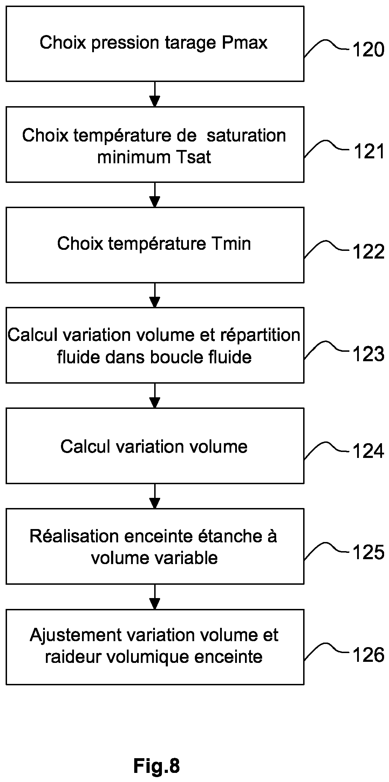

La Figure 8 montre un procédé de réalisation du dispositif de refroidissement. Ce procédé comporte une première étape 120 de choix d'une pression de tarage Pmax, correspondant à un point de fonctionnement dont la température de saturation est Tmax et la pression de saturation est Pmax. Une deuxième étape 121 est le choix d'une température de saturation minimum Tsat inférieure à la température de saturation Tmax correspondant à une pression de saturation Psat et une troisième étape 122 est le choix d'une température minimale Tmin telle que cette température minimale Tmin soit inférieure à la température de saturation minimum Tsat. Dans une étape 123, on calcule la variation de volume et de répartition du fluide dans la boucle fluide 35 capillaire entre le point de fonctionnement ayant pour température de saturation Tmax et pour pression de saturation Pmax, et le point de fonctionnement où le liquide est à la température minimale Tmin et la vapeur est à la température de saturation minimum Tsat. Puis dans une étape 124, on calcule la variation de volume DV du fluide entre ces deux points de fonctionnement à l'endroit où se situe l'amortisseur 70 thermique. Dans une étape 125, on réalise une enceinte 71 étanche à volume variable dont la pression de tarage est égale à Pmax, la variation maximum de volume est plus grande ou égale à la variation de volume DV et dont la raideur volumique est sensiblement égale au rapport entre la différence entre la pression de saturation et la pression de saturation minimum et la variation de volume (Pmax-Psat)/DV.

Il est en outre avantageux que la variation de volume DV et la raideur volumique de l'amortisseur 70 thermique soient ajustées dans une étape 126, de sorte que l'obstruction s'effectue automatiquement dès lors que la température du point de fonctionnement descend en dessous d'un seuil donné.

## Revendications

**1.** Dispositif (30) de refroidissement adapté à la régulation thermique d'une source de chaleur (20) d'un satellite comportant au moins une boucle fluide (35) capillaire formée par :

- un évaporateur (40) capillaire relié à au moins un réservoir (65) de fluide,
- au moins un condenseur (45),
- un fluide caloporteur circulant à l'intérieur de la boucle fluide (35) capillaire,
- une conduite (50) dans laquelle circule le fluide caloporteur à l'état majoritairement liquide,
- une conduite (60) dans laquelle circule le fluide caloporteur à l'état majoritairement gazeux,
- la conduite (60) reliant l'évaporateur (40) au condenseur (45) et la conduite (50) reliant le condenseur (45) à l'évaporateur (40) de sorte à former un circuit fermé de circulation de fluide, **caractérisé en ce que** le dispositif de refroidissement comporte en outre un dispositif (70) appelé « amortisseur thermique », constitué d'une enceinte (71) étanche à volume variable comportant une raideur volumique adaptée pour que l'enceinte (71) étanche à volume variable se déforme de façon passive dans une plage donnée de fonctionnement de la boucle fluide (35) capillaire en fonction de la variation de volume et de répartition du fluide dans la boucle fluide (35) capillaire.

**2.** Dispositif selon la revendication 1, **caractérisé en ce que** l'enceinte (71) étanche à volume variable prend la forme d'un soufflet (74).

**3.** Dispositif selon la revendication 1 ou 2, **caractérisé en ce que** l'enceinte (71) étanche à volume variable est fermée et se situe à l'intérieur de la boucle fluide (35) capillaire.

**4.** Dispositif selon la revendication 3, **caractérisé en ce que** l'enceinte (71) étanche à volume variable comporte une enveloppe déformable et fermée hermétiquement, et un ressort (72) positionné à l'intérieur de cette enveloppe déformable.

**5.** Dispositif selon la revendication 3, **caractérisé en ce que** l'enceinte (71) étanche à volume variable comporte une enveloppe déformable et fermée hermétiquement, et un fluide (73) positionné à l'intérieur de cette enveloppe déformable.

**6.** Dispositif selon la revendication 3, **caractérisé en ce que** l'enceinte (71) étanche à volume variable comporte une enveloppe déformable fermée hermétiquement, ainsi qu'un ressort (72) et un fluide (73) positionnés à l'intérieur de cette enveloppe déformable.

**7.** Dispositif selon l'une des revendications 3 à 6, **caractérisé en ce que** l'amortisseur (70) thermique est positionné à l'intérieur du réservoir (65) de l'évaporateur (40) capillaire.

8. Dispositif selon l'une des revendications 3 à 6, **caractérisé en ce que** l'amortisseur (70) thermique est positionné dans la partie de la boucle fluide (35) située en aval du condenseur (45) où se situe principalement la phase liquide du fluide caloporteur.

9. Dispositif selon la revendication 1 ou 2, **caractérisé en ce que** l'enceinte (71) étanche à volume variable est une partie de la boucle fluide (35) capillaire contenant du fluide.

10. Dispositif selon la revendication 9, **caractérisé en ce que** l'enceinte (71) étanche à volume variable est une partie du réservoir (65) de l'évaporateur (40) capillaire.

11. Dispositif selon la revendication 1, **caractérisé en ce que** la raideur volumique est adaptée à la pression de saturation du fluide caloporteur et vaut par exemple un à quelques dizaines de bars par centimètre cube pour de l'ammoniac.

12. Dispositif selon l'une des revendications 1 à 11, **caractérisé en ce que** la variation maximum du volume de l'enceinte de l'amortisseur (70) thermique est comprise entre 10% et 50% du volume total de la boucle fluide (35).

13. Dispositif selon l'une des revendications 1 à 12, **caractérisé en ce que** au moins une butée (90, 91) mécanique peut être utilisée pour limiter la variation de volume de l'enceinte (71) étanche à volume variable.

14. Dispositif selon l'une des revendications 1 à 13, **caractérisé en ce que** le dispositif de refroidissement comporte en outre un dispositif de tarage modifiant la pression de tarage de l'amortisseur (70) thermique.

15. Dispositif selon l'une des revendications 1 à 14, **caractérisé en ce que** l'augmentation du volume de l'enceinte (71) étanche à volume variable obstrue passivement l'arrivée de liquide dans le réservoir (65) de la boucle fluide (35) capillaire lorsque ledit volume atteint une valeur donnée.

16. Dispositif selon la revendication 15, **caractérisé en ce que** le dispositif de refroidissement comporte en outre un système de réchauffage permettant d'augmenter la température et la pression du fluide en contact avec l'amortisseur (70) thermique afin de faciliter le redémarrage de la boucle fluide (35) à partir d'un état où l'arrivée de liquide dans le réservoir est bloquée.

17. Procédé de réalisation du dispositif de refroidissement adapté à la régulation thermique d'une source de chaleur d'un satellite, tel que défini dans l'une des revendications précédentes, **caractérisé en ce qu'**il comporte les étapes suivantes :

- choix (120) d'une pression de tarage (Pmax), correspondant à un point de fonctionnement définissant une température de saturation (Tmax) et une pression de saturation (Pmax),
- choix (121) d'une température de saturation minimum (Tsat) inférieure à la température de saturation (Tmax) du point de fonctionnement, la température de saturation minimum (Tsat) correspondant à une pression de saturation minimum (Psat),
- choix (122) d'une température minimale (Tmin) telle que cette température minimale (Tmin) soit inférieure à la température de saturation minimum (Tsat),
- calcul (123) de la variation de volume et de répartition du fluide dans la boucle fluide (35) capillaire entre le point de fonctionnement ayant pour température de saturation (Tmax) et pour pression de saturation (Pmax), et le point de fonctionnement où le liquide est à la température minimale (Tmin) et la vapeur est à la température de saturation minimum (Tsat),
- calcul (124) de la variation de volume (DV) du fluide entre ces deux points de fonctionnement à l'endroit où se situe l'amortisseur (70) thermique,
- réalisation (125) d'une enceinte (71) étanche à volume variable dont la pression de tarage est égale à la pression de saturation minimum (Pmax), la variation maximum de volume est plus grande ou égale à ladite variation de volume (DV) et dont la raideur volumique est sensiblement égale au rapport entre la différence entre la pression de saturation et la pression de saturation minimum et la variation de volume ((Pmax-Psat)/DV), la raideur volumique étant ainsi adaptée pour que l'enceinte (71) étanche à volume variable se déforme de façon passive dans une plage donnée de fonctionnement de la boucle fluide (35) capillaire en fonction de la variation de volume et de répartition du fluide dans la boucle fluide (35) capillaire.

18. Procédé de réalisation du dispositif de refroidissement selon la revendication 17, **caractérisé en ce qu'**il comporte en outre l'étape suivante :

- ajustement (126) de la variation de volume (DV) et de la raideur volumique de l'amortisseur (70) thermique de sorte que l'augmentation du volume de l'enceinte (71) étanche à volume variable obstrue passivement l'arrivée de liquide dans le réservoir (65) de la boucle fluide (35) capillaire lorsque ledit volume atteint une valeur donnée.

19. Procédé de réalisation du dispositif de refroidissement selon la revendication 18, **caractérisé en ce que** l'obstruction s'effectue automatiquement dès lors que la température du point de fonctionnement descend en dessous d'un seuil donné.

20. Satellite (10) comportant au moins une surface (15) radiative **caractérisé en ce qu'**il est équipé d'un dispositif de refroidissement selon l'une des revendications 1 à 16, comportant un condenseur (45) en contact thermique avec ladite surface (15) radiative soumise à des variations de température de l'environnement.

## Patentansprüche

1. Kühlvorrichtung (30) zur Regulierung der Temperatur einer Wärmequelle (20) eines Satelliten, aufweisend mindestens eine Kapillar-Fluidschleife (35), gebildet von:

   - einem Kapillar-Verdampfer (40), der mit mindestens einem Fluid-Vorratsbehälter (65) verbunden ist,
   - mindestens einen Kondensator (45),
   - einem Wärmeträgerfluid, welches im Inneren der Kapillar-Fluidschleife (35) zirkuliert,
   - einer Leitung (50), in der das Wärmeträgerfluid in mehrheitlich flüssigem Zustand zirkuliert,
   - einer Leitung (60), in welcher das Wärmeträgerfluid in mehrheitlich gasförmigem Zustand zirkuliert,
   - der Leitung (60), die den Verdampfer (40) mit dem Kondensator (45) verbindet, und der Leitung (50), welche den Kondensator (45) mit dem Verdampfer (40) verbindet, so dass ein geschlossener Fluidzirkulationskreis gebildet wird, **dadurch gekennzeichnet, dass** die Kühlvorrichtung ferner eine als "thermischer Dämpfer" bezeichnete Vorrichtung (70) aufweist, bestehend aus einem dichten Behälter (71) mit variablem Volumen, aufweisend eine Volumensteifigkeit, die angepasst ist, dass sich der dichte Behälter (71) mit variablem Volumen in einem bestimmten Betriebsbereich der Kapillar-Fluidschleife (35) in Abhängigkeit von der Schwankung des Volumens und der Verteilung des Fluids in der Kapillar-Fluidschleife (35) passiv verformt.

2. Vorrichtung nach Anspruch 1, **dadurch gekennzeichnet, dass** der dichte Behälter (71) mit variablem Volumen die Form eines Balgs (74) hat.

3. Vorrichtung nach Anspruch 1 oder 2, **dadurch gekennzeichnet, dass** der dichte Behälter (71) mit variablem Volumen geschlossen ist und sich im Inneren der Kapillar-Fluidschleife (35) befindet.

4. Vorrichtung nach Anspruch 3, **dadurch gekennzeichnet, dass** der dichte Behälter (71) mit variablem Volumen eine verformbare und hermetisch geschlossene Hülle und eine Feder (72) aufweist, die im Inneren dieser verformbaren Hülle positioniert ist.

5. Vorrichtung nach Anspruch 3, **dadurch gekennzeichnet, dass** der dichte Behälter (71) mit variablem Volumen eine verformbare und hermetisch geschlossene Hülle und ein Fluid (73) aufweist, welches im Inneren dieser verformbaren Hülle positioniert ist.

6. Vorrichtung nach Anspruch 3, **dadurch gekennzeichnet, dass** der dichte Behälter (71) mit variablem Volumen eine verformbare hermetisch geschlossene Hülle sowie eine Feder (72) und ein Fluid (73) aufweist, die im Inneren dieser verformbaren Hülle positioniert sind.

7. Vorrichtung nach einem der Ansprüche 3 bis 6, **dadurch gekennzeichnet, dass** der thermische Dämpfer (70) im Inneren des Vorratsbehälters (65) des Kapillar-Verdampfers (40) positioniert ist.

8. Vorrichtung nach einem der Ansprüche 3 bis 6, **dadurch gekennzeichnet, dass** der thermische Dämpfer (70) in dem Teil der Fluidschleife (35) positioniert ist, die sich dem Kondensator (45) nachgelagert befindet, wo sich hauptsächlich die flüssige Phase des Wärmeträgerfluids befindet.

9. Vorrichtung nach Anspruch 1 oder 2, **dadurch gekennzeichnet, dass** der dichte Behälter (71) mit variablem Volumen ein Teil der Kapillar-Fluidschleife (35) ist, die Fluid enthält.

10. Vorrichtung nach Anspruch 9, **dadurch gekennzeichnet, dass** der dichte Behälter (71) mit variablem Volumen ein Teil des Vorratsbehälters (65) des Kapillar-Verdampfers (40) ist.

11. Vorrichtung nach Anspruch 1, **dadurch gekennzeichnet, dass** die Volumensteifigkeit an den Sättigungsdruck des Wärmeträgerfluids angepasst ist und beispielsweise ein bis einige Dutzend Bar je Quadratzentimeter für Ammoniak beträgt.

12. Vorrichtung nach einem der Ansprüche 1 bis 11, **dadurch gekennzeichnet, dass** die maximale Schwankung des Volumens des Behälters des thermischen Dämpfers (70) zwischen 10 % und 50 % des Gesamtvolumens der Fluidschleife (35) liegt.

**13.** Vorrichtung nach einem der Ansprüche 1 bis 12, **dadurch gekennzeichnet, dass** mindestens ein mechanischer Anschlag (90, 91) verwendet werden kann, um die Schwankung des Volumens des dichten Behälters (71) mit variablem Volumen zu begrenzen.

**14.** Vorrichtung nach einem der Ansprüche 1 bis 13, **dadurch gekennzeichnet, dass** die Kühlvorrichtung ferner eine Tariervorrichtung aufweist, die den Tarierdruck des thermischen Dämpfers (70) verändert.

**15.** Vorrichtung nach einem der Ansprüche 1 bis 14, **dadurch gekennzeichnet, dass** durch die Erhöhung des Volumens des dichten Behälters (71) mit variablem Volumen der Flüssigkeitseinlass in den Vorratsbehälter (65) der Kapillar-Fluidschleife (35) passiv verschlossen wird, wenn das Volumen einen bestimmten Wert erreicht.

**16.** Vorrichtung nach Anspruch 15, **dadurch gekennzeichnet, dass** die Kühlvorrichtung ferner ein Heizsystem aufweist, das erlaubt, die Temperatur und den Druck des Fluids im Kontakt mit dem thermischen Dämpfer (70) zu erhöhen, um den Neustart der Fluidschleife (35) ab einem Zustand zu erleichtern, in dem der Flüssigkeitseinlass in den Vorratsbehälter blockiert ist.

**17.** Verfahren zur Herstellung der Kühlvorrichtung zur Regulierung der Temperatur einer Wärmequelle nach einem der vorangehenden Ansprüche, **dadurch gekennzeichnet, dass** es die folgenden Schritte aufweist:

- Auswählen (120) eines Tarierdrucks (Pmax), der einem Betriebspunkt entspricht, der eine Sättigungstemperatur (Tmax) und einen Sättigungsdruck (Pmax) definiert,
- Auswählen (121) einer Mindest-Sättigungstemperatur (Tsat) unter der Sättigungstemperatur (Tmax) des Betriebspunkts, wobei die Mindest-Sättigungstemperatur (Tsat) einem Mindest-Sättigungsdruck (Psat) entspricht,
- Auswählen (122) einer minimalen Temperatur (Tmin) derart, dass diese minimale Temperatur (Tmin) unter der Mindest-Sättigungstemperatur (Tsat) liegt,
- Berechnen (123) der Schwankung des Volumens und der Verteilung des Fluids in der Kapillar-Fluidschleife (35) zwischen dem Betriebspunkt mit Sättigungstemperatur (Tmax) und Sättigungsdruck (Pmax) und dem Betriebspunkt, an dem die Flüssigkeit auf minimaler Temperatur (Tmin) ist und der Dampf auf Mindest-Sättigungstemperatur (Tsat) ist,
- Berechnen (124) der Schwankung des Volumens (DV) des Fluids zwischen seinen zwei Betriebspunkten an der Stelle, wo sich der thermische Dämpfer (70) befindet,
- Herstellen (125) eines dichten Behälters (71) mit variablem Volumen, dessen Tarierdruck gleich dem Mindest-Sättigungsdruck (Pmax) ist, wobei die maximale Schwankung des Volumens größer oder gleich der Schwankung des Volumens (DV) ist und dessen Volumensteifigkeit etwa gleich dem Verhältnis zwischen der Differenz zwischen dem Sättigungsdruck und dem Mindest-Sättigungsdruck und der Schwankung des Volumens ((Pmax-Psat)/DV) ist, wobei die Volumensteifigkeit damit angepasst ist, dass sich der dichte Behälter (71) mit variablem Volumen in einem bestimmten Betriebsbereich der Kapillar-Fluidschleife (35) in Abhängigkeit von der Schwankung des Volumens und der Verteilung des Fluids in der Kapillar-Fluidschleife (35) passiv verformt.

**18.** Verfahren zur Herstellung der Kühlvorrichtung nach Anspruch 17, **dadurch gekennzeichnet, dass** es ferner den folgenden Schritt aufweist:

- Einstellen (126) der Schwankung des Volumens (DV) und der Volumensteifigkeit des thermischen Dämpfers (70) derart, dass durch die Erhöhung des Volumens des dichten Behälters (71) mit variablem Volumen der Flüssigkeitseinlass in den Vorratsbehälter (65) der Kapillar-Fluidschleife (35) passiv verschlossen wird, wenn das Volumen einen bestimmten Wert erreicht.

**19.** Verfahren zur Herstellung der Kühlvorrichtung nach Anspruch 18, **dadurch gekennzeichnet, dass** der Verschluss automatisch erfolgt, sobald die Temperatur des Betriebspunkts unter einen bestimmten Grenzwert sinkt.

**20.** Satellit (10), aufweisend mindestens eine Strahlungsfläche (15), **dadurch gekennzeichnet, dass** er mit einer Kühlvorrichtung nach einem der Ansprüche 1 bis 16 ausgestattet ist, aufweisend einen Kondensator (45) in thermischem Kontakt mit der Strahlungsfläche (15), die Temperaturschwankungen der Umgebung ausgesetzt ist.

**Claims**

**1.** Cooling device (30) suitable for regulating the temperature of a heat source (20) of a satellite comprising at least one capillary loop heat pipe (35) formed by:

- a capillary evaporator (40) connected to at least one tank (65) of fluid,
- at least one condenser (45),

- a heat transfer fluid flowing inside the capillary loop heat pipe (35),
- a conduit (50) in which flows the heat transfer fluid in the mostly liquid state,
- a conduit (60) in which flows the heat transfer fluid in the mostly gaseous state,
- the conduit (60) connecting the evaporator (40) to the condenser (45) and the conduit (50) connecting the condenser (45) to the evaporator (40) in such a way as to form a closed circuit for the flow of fluid, **characterised in that** the cooling device further comprises a device (70) referred to as "thermal damper", formed of a variable volume leak-tight chamber (71) comprising a volume stiffness adapted so that the variable volume leak-tight chamber (71) is deformed passively in a given operating range of the capillary loop heat pipe (35) according to the variation in volume and the distribution of the fluid in the capillary loop heat pipe (35).

2. Device according to claim 1, **characterised in that** the variable volume leak-tight chamber (71) takes the form of a bellows (74).

3. Device according to claim 1 or 2, **characterised in that** the variable volume leak-tight chamber (71) is closed and is located inside the capillary loop heat pipe (35).

4. Device according to claim 3, **characterised in that** the variable volume leak-tight chamber (71) comprises a deformable and hermetically-sealed jacket, and a spring (72) positioned inside this deformable jacket.

5. Device according to claim 3, **characterised in that** the variable volume leak-tight chamber (71) comprises a deformable and hermetically-sealed jacket, and a fluid (73) positioned inside this deformable jacket.

6. Device according to claim 3, **characterised in that** the variable volume leak-tight chamber (71) comprises a deformable and hermetically-sealed jacket, as well as a spring (72) and a fluid (73) positioned inside this deformable jacket.

7. Device according to one of claims 3 to 6, **characterised in that** the thermal damper (70) is positioned inside the tank (65) of the capillary evaporator (40).

8. Device according to one of claims 3 to 6, **characterised in that** the thermal damper (70) is positioned in the portion of the loop heat pipe (35) located downstream from the condenser (45) where the liquid phase of heat transfer fluid is mainly located.

9. Device according to claim 1 or 2, **characterised in that** the variable volume leak-tight chamber (71) is a portion of the capillary loop heat pipe (35) containing fluid.

10. Device according to claim 9, **characterised in that** the variable volume leak-tight chamber (71) is a portion of the tank (65) of the capillary evaporator (40).

11. Device according to claim 1, **characterised in that** the volume stiffness is adapted to the saturation pressure of the heat transfer fluid and is for example from one to a few tens of bars per cubic centimetre for ammonia.

12. Device according to one of claims 1 to 11, **characterised in that** maximum variation of the volume of the chamber of the thermal damper (70) is between 10% and 50% of the total volume of the loop heat pipe (35).

13. Device according to one of claims 1 to 12, **characterised in that** at least one mechanical abutment (90, 91) can be used to limit the variation of volume of the variable volume leak-tight chamber (71).

14. Device according to one of claims 1 to 13, **characterised in that** the cooling device further comprises a calibration device that modifies the pressure setting of the thermal damper (70).

15. Device according to one of claims 1 to 14, **characterised in that** the increase in the volume of the variable volume leak-tight chamber (71) passively obstructs the arrival of liquid in the tank (65) of the capillary loop heat pipe (35) when said volume reaches a given value.

16. Device according to claim 15, **characterised in that** the cooling device further comprises a reheating system that makes it possible to increase the temperature and the pressure of the fluid in contact with the thermal damper (70) so as to facilitate the restarting of the loop heat pipe (35) from a state wherein the arrival of liquid in the tank is blocked.

17. Method for producing the cooling device suitable for regulating the temperature of a heat source of a satellite, such as defined in one of the preceding claims, **characterised in that** it comprises the following steps:

> - choosing (120) a pressure setting (Pmax), that corresponds to an operating point that defines a saturation temperature (Tmax) and a saturation pressure (Pmax),
> - choosing (121) a minimum saturation temperature (Tsat) less than the saturation temperature (Tmax) of the operating point, with the minimum saturation temperature (Tsat) corresponding to a minimum saturation pressure (Psat),

- choosing (122) a minimum temperature (Tmin) such that this minimum temperature (Tmin) is less than the minimum saturation temperature (Tsat),

- calculating (123) the variation in volume and in the distribution of the fluid in the capillary loop heat pipe (35) between the operating point that has for saturation temperature (Tmax) and for saturation pressure (Pmax), and the operating point where the liquid is at the minimum temperature (Tmin) and the vapour is at the minimum saturation temperature (Tsat),

- calculating (124) the variation in volume (DV) of the fluid between these two operating points at the location where the thermal damper (70) is located,

- producing (125) a variable volume leak-tight chamber (71) of which the pressure setting is equal to the minimum saturation pressure (Pmax), the maximum variation in volume is greater than or equal to said variation in volume (DV) and of which the volume stiffness is substantially equal to the ratio between the difference between the saturation pressure and the minimum saturation pressure and the variation in volume ((Pmax-Psat)/DV), the volume stiffness thus being adapted so that the variable volume leak-tight chamber (71) is passively deformed in a given operating range of the capillary loop heat pipe (35) according to the variation in volume and the distribution of the fluid in the capillary loop heat pipe (35).

**18.** Method for producing the cooling device according to claim 17, **characterised in that** it further comprises the following step:

- adjusting (126) the variation in volume (DV) and in the volume stiffness of the thermal damper (70) in such a way that the increase in the volume of the variable volume leak-tight chamber (71) passively obstructs the arrival of liquid in the tank (65) of the capillary loop heat pipe (35) when said volume reaches a given value.

**19.** Method for producing the cooling device according to claim 18, **characterised in that** the obstruction is carried out automatically when the temperature of the operating point falls below a given threshold.

**20.** Satellite (10) comprising at least one radiative surface (15) **characterised in that** it is provided with a cooling device according to one of claims 1 to 16, comprising a condenser (45) in thermal contact with said radiative surface (15) subjected to the variations in temperature of the environment.

**Fig.1**

**Fig.2**

**Fig.3**

**Fig.4**

**Fig.5a**

**Fig.5b**

**Fig.5c**

**Fig.5d**

**Fig.6**

**Fig.7a**

**Fig.7b**

Choix pression tarage Pmax ⟋⟍120

Choix température de saturation minimum Tsat ⟋⟍121

Choix température Tmin ⟋⟍122

Calcul variation volume et répartition fluide dans boucle fluide ⟋⟍123

Calcul variation volume ⟋⟍124

Réalisation enceinte étanche à volume variable ⟋⟍125

Ajustement variation volume et raideur volumique enceinte ⟋⟍126

**Fig.8**

**EP 2 802 834 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- EP 1366990 A1
- WO 2010037872 A1
- WO 2008001004 A1
- EP 2291067 A1